# EUROPÄISCHE PATENTSCHRIFT

(11) **EP 1 270 657 B1**
(45) Veröffentlichungstag und Bekanntmachung des Hinweises auf die Patenterteilung: **29.03.2006**
(21) Anmeldenummer: 01115911.8
(22) Anmeldetag: 29.06.2001
(51) Int. Cl.: C08K 5/01, C08K 5/548, C08K 3/36, C08L 15/00

(54) **Kautschukmischung für Laufstreifen von Reifen**
Rubber composition for tire tread
Composition de caoutchouc pour bande de roulement d'un pneu

(43) Veröffentlichungstag der Anmeldung: 02.01.2003
(73) Patentinhaber: Continental Aktiengesellschaft, 30165 Hannover (DE)
(72) Erfinder: Söhnen, Dietmar, Dr., 31867 Lauenau (DE); Jäckel, Janna, 30173 Hannover (DE); Meier, Martin, Dr., 69457 Werl (DE)

(56) Entgegenhaltungen:
- EP-A- 0 708 137
- WO-A-99/09036
- US-A- 4 616 069
- US-A- 4 894 409
- V. NULL : "Safe process oils for tires with low environmental impact" KAUTSCHUK UND GUMMI - KUNSTSTOFFE., Bd. 52, Nr. 12, 1999, Seiten 799-805, XP002184259 DR. ALFRED HUTHIG VERLAG GMBH. HEIDELBERG., DE ISSN: 0948-3276

## Beschreibung

Die Erfindung betrifft eine Kautschukmischung ohne aromatische Prozessöle, die nach Vulkanisation mit Schwefel ein für Laufstreifen von Reifen geeignetes Vulkanisat ergibt. Die Erfindung betrifft ferner einen Reifen, dessen Laufstreifen zumindest zum Teil aus der mit Schwefel vulkanisierten Kautschukmischung besteht.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Eine Verbesserung des Nassgriffs und des Trockenbremsens zieht z. B. in der Regel eine Verschlechterung des Rollwiderstandes, der Wintereigenschaften und des Abriebverhaltens nach sich. Um den Konflikt zwischen diesen sich gegensätzlich verhaltenden Reifeneigenschaften zu entschärfen, hat sich fein verteilte gefällte Kieselsäure als Füllstoff in Kautschukmischungen mit Styrol-Butadien-Copolymere, meist in Kombination mit wenigstens einem anderen Dienelastomer, durchgesetzt. Die Kieselsäure wird allein oder in Kombination mit Ruß eingesetzt.

Um Reifeneigenschaften wie Abrieb, Nassrutschverhalten und Rollwiderstand weiter zu verbessern, ist es außerdem z. B. aus der DE 36 35 587 C2 und der DE 39 10 512 A1 bekannt, verschiedene Styrol-Butadien-Copolymere mit unterschiedlichen Styrol- und Vinyl-Gehalten und mit unterschiedlichen Modifizierungen für die Kautschukmischungen zu verwenden. So können die in diesen Schriften vorgeschlagenen lösungspolymerisierten Styrol-Butadien-Copolymere z. B. an Zinn, Silicium, Blei oder Germanium gekoppelt sein oder sie sind chemisch mit Benzophenonen, Thiobenzophenonen oder mit Verbindungen modifiziert, die eine Struktur der Formel aufweisen, wobei X ein Sauerstoffatom oder ein Schwefelatom ist.

Der vorliegenden Erfindung liegt nun die Aufgabe zugrunde, Kautschukmischungen für Laufstreifen von Reifen bereitzustellen, die nach der Vulkanisation mit Schwefel hinsichtlich ihrer Eigenschaften Nassgriff, Wintereigenschaften, Abrieb und Rollwiderstand weiter verbessert sind.

Gelöst wird diese Aufgabe erfindungsgemäß dadurch, dass die Kautschukmischung ohne aromatische Prozessöle
- 30 bis 90 phr (Gewichtsteile, bezogen auf 100 Gewichtsteile der gesamten Kautschuke in der Mischung) zumindest eines lösungspolymerisierten Styrol-Butadien-Copolymers A (S-SBR), das einen Styrolgehalt von 5 bis 35 Gew.-% und einem Vinylanteil von 10 bis 85 Gew.-% aufweist, das gekoppelt ist und dessen Endgruppen mit zumindest einer Substanz ausgewählt aus der Gruppe, bestehend aus Aminoaldehyden, Aminoketonen, Aminothioaldehyden, Aminothioketonen und organischen Substanzen, die in ihrem Molekül einen Stnikturbaustein 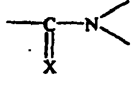 mit X = O oder S aufweisen, chemisch modifiziert sind,
- 10 bis 70 phr zumindest eines weiteren Kautschukes aus der Gruppe der Dienkautschuke,
- 20 bis 100 phr Kieselsäure,
- 1 bis 15 phr eines Silan-Kupplungsagens.
- 5 bis 60 phr zumindest eines Weichmachers, ausgewählt aus naphthenischen Mineralölweichmachern, MES (mild extraction solvate) und TDAE (treated distillate aromatic extract),
enthält und dass sie nach Vulkartisation mit 0,5 bis 2,0 phr Schwefel ein für Laufstreifen von Reifen geeignetes Vulkanisat ergibt.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird dabei stets auf 100 Gewichtsteile der gesamten Masse aller in der Mischung vorhandenen Kautschuke bezogen.

Überraschenderweise kann durch die gleichzeitige Verwendung des speziellen lösungspolymerisierten Styrol-Butadien-Copolymers A mit der Kieselsäure, den besonderen Weichmachern und den geringen Schwefeimengen erreicht werden, dass Reifen, die einen Laufstreifen, hergestellt aus der Kauschukmischung gemäß Anspruch 1, aufweisen, neben verbessertem Rollwiderstand, verbesserten Wintereigenschaften und verbessertem Abrieb auch ein besseres Nassrutsch- und Trockenbremsverhalten aufweisen. Die gleichzeitige Verbesserung des sich üblicherweise konträr verhaltenden Nassrutschverhaltens war für den Fachmann besonders unerwartet, da die alleinige Zugabe der einzelnen speziellen Bestandteile zu einer Mischung, wie z. B. die alleinige Zugabe von MES, mit einer Verschlechterung des Nassgriffs einhergeht. Erst der gleichzeitige Einsatz der in Anspruch 1 angegebenen Mischungsbestandteile bringt die überraschende Verbesserung aller genannten Reifeneigenschaften.

Das gekoppelte (gekuppelt, engl.: coupled) und endgruppenmodifizierte lösungspolymerisierte Styrol-Butadien-Copolymer A kann auf unterschiedliche Weise, wie z. B. über Zinn, Silicium oder organisch-chemische Brücken, gekoppelt sein, wobei unter Kopplung (Kupplung, engl.: coupling) die stabile Verknüpfung von Polymerketten zu verzweigten Strukturen im unvulkanisierten Zustand verstanden wird. Bevorzugt wird in der erfindungsgemäßen Kautschukmischung mit Zinn gekoppeltes lösungspolymerisiertes Styröl-Butadien-Copolymer eingesetzt.
Der Anteil an gekoppelten Polymerkettenenden im lösungspolymerisierte Styrol-Butadien-Copolymer A kann zwischen 30 und 60 % liegen. Der Anteil an chemisch modifizierten Kettenenden kann 30 bis 70 % betragen.

Lösungspolymerisierte Styrol-Butadien-Copolymere A mit Styrolgehalten von 5 bis 35 Gew.-% und Vinylanteilen von 10 bis 85 Gew.-%, die z. B. mit Zinn gekoppelt sind und deren Endgruppen mit zumindest einer Substanz ausgewählt aus der Gruppe, bestehend aus Aminoaldehyden, Aminoketonen, Aminothioaldehyden, Aminothioketonen und organischen Substanzen, die in ihrem Molekül einen Strukturbaustein 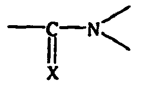 mit X = O oder S aufweisen, chemisch modifiziert sind, sind z. B. in der US 4,616,069 beschrieben. Ihre Herstellung erfolgt dort durch Reaktion von aktiven Styrol-Butadien-Copolymeren, die mit Alkali- und/oder Erdalkalimetallen terminiert sind, mit einer Zinnverbindung der allgemeinen Formel RₐSnX_{b} sowie mit zumindest einer der genannten Substanzen zur Endgruppenmodifizierung.

Das spezielle lösungspolymerisierte Styrol-Butadien-Copolymer A ist in Mengen von 30 bis 90 phr, vorzugsweise 40 bis 70 phr, in der Kautschukmischung enthalten. Bei mehr als 90 phr des Copolymers ergibt sich bei den Vulkanisaten eine schlechte Reiß- und Kerbfestigkeit und es ergeben sich Probleme bei der Vulkanisation; bei weniger als 30 phr des Copolymers beobachtet man keine signifikante Verbesserung der Reifeneigenschaften.

Besonders bevorzugt ist es, wenn das lösungspolymerisierte und gekoppelte Styrol-Butadien-Copolymer A Endgruppen aufweist, die mit einem Aminobenzophenon modifiziert sind. Die Aminogruppe kann dabei substituiert oder unsubstituiert sein. Als Beispiele für derartige Aminobenzophenone seien 4-Aminobenzophenon, 4-Dimethylamino-benzophenon, 4,4'-Diaminobenzophenon, 4,4'-Bis-(dimethylamino)-benzophenon und 4,4'-Bis-(diehtylamino)-benzophenon genannt. Mit solchen Polymeren lassen sich besonders gute Reifeneigenschaften erzielen und die Polymere sind in großem Maßstab verfügbar.

Die schwefelvernetzbare Kautschukmischung enthält neben dem speziellen lösungspolymerisierten Styrol-Butadien-Copolymer 10 bis 70 phr zumindest eines weiteren Dienkautschukes. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke in Mengen von 30 bis 60 phr eingesetzt wird bzw. werden und ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiutnalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer, welches nicht gekoppelt und endgruppenmodifiziert ist, kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Für die erfindungsgemäße Kautschukmischung können die dem Fachmann bekannten Kieselsäuren, die als Füllstoff für Reifenkautschukmischungen geeignet sind, verwendet werden. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren mit den genannten physikalischen Eigenschaften können z. B. jene des Typs VN3 (Handelsname) der Firma Degussa zum Einsatz kommen.

Zur Verbesserung der Verarbeitbarkeit und zur Anbindung der Kieselsäure an den Dienkautschuk werden Silan-Kupplungsagenzien in Kautschukmischungen eingesetzt. Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe der Kieselsäure zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Gemäß einer vorteilhaften Weiterbildung der Erfindung wird als Silan-Kupplungsagens ein geblocktes Mercaptosilan einsetzt. Derartige geblockte Mercaptosilane sowie ihre Herstellung sind z. B. aus der WO 99/09036 bekannt. Diese Silan-Kupplungsagenzien bieten den Vorteil, dass während des Mischens der Grund- und Fertigmischung nur der Füllstoff (Kieselsäure) mit den Silanen reagieren kann, während das Schwefelatom, welches später die Anbindung an die Polymere gewährleistet, zunächst noch blockiert ist. Auf diese Weise lässt sich der Füllstoff gut in der Polymermatrix verteilen und eine vorzeitige Vulkanisation, verbunden mit einer Viskositätserhöhung, wird vermieden. Durch das Vorhandensein von deblockierenden Verbindungen in der Mischung erfolgt während der Vulkanisation die Aufspaltung des blockierten Mercaptosilans, welches dann über Schwefelbiücken an die umgebenden Polymere gebunden werden kann. Als deblockierende Verbindungen können Wasser- oder Alkoholmoleküle wirken, die üblicherweise in Restmengen in der Mischung enthalten sind. Alternativ dazu können auch andere nucleophile Substanzen, wie primäre oder sekundäre Amine, z. B. Diphenylguanidin (ein häufig eingesetzter Beschleuniger), verwendet werden. Bei Verwendung der geblockten Mercaptosilane anstelle der herkömmlichen bifunktiollen Silane können die Reifeneigenschaften vor allem im Hinblick auf den Rollwiderstand, den Abrieb und die Wintereigenschaften nochmals verbessert werden.

Besonders bevorzugt ist der Einsatz von 3-(S-Octanoylthio)-propyltriethoxysilan (3-Triethoxysilyl-1-propylthiooctoat)

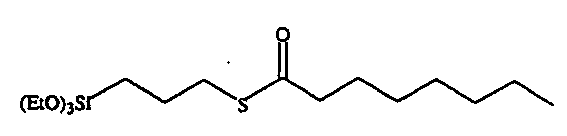

Dieses geblockte Mercaptosilan lässt sich einfach herstellen, die Deblockierung funktioniert problemlos und zusätzlich wird bei der Deblockierung noch Octansäure oder ein Derivat der Octansäure frei; welche bzw. welches als zusätzlicher Weichmacher dient und die Eigenschaften der aus solchen Mischungen hergestellten Reifen verbessert.

Die erfindungsgemäße Kautschukmischung ist frei von aromatischen Prozessölen. Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die Kautschukmischung enthält dagegen als zumindest 5 bis 60 phr zumindest eines Weichmachers ausgewählt aus naphthenischen Mineralölweichmachern, MES (mild extraction solvate) und TDAE (treated distillate aromatic extract). Unter naphthenischen Mineralölweichmachern versteht man dabei jene, die gemäß ASTM D 2140 zwischen 25 und 45 % naphthenische Bestandteile (C_{N}), weniger als 30 % aromatische Bestandteile (C_{A}) und zwischen 35 und 65 % paraffinische (Cp) Bestandteile enthalten. Die Viskositäts-Dichte-Konstante gemäß ASTM D 2140 (VDK) von naphthenischen Prozessölen liegt zwischen 0,820 und 0,899. Ferner werden die naphthenischen Prozessöle nach ASTM D 2226 klassifiziert in Öltyp 103 und 104 A. Hinsichtlich weiterer Informationen zu den Weichmachern MES und TDAE sei in diesem Zusammenhang exemplarisch auf V. Null, "Safe Process Oils for Tires with Low Environmental Impact", Kautschuk Gummi Kunststoffe, 12/1999, S. 799-805 verwiesen. Naphthenische Prozessöle, MES und TDAE zeichnen sich durch einen geringen Gehalt an polycyclischen aromatischen Verbindungen (PCA-Gehalt) aus und gelten daher als unbedenklich für Umwelt und Gesundheit.

Gemäß einer bevorzugten Weiterbildung der Erfindung enthält die Kautschukmischung als weiteren Weichmacher 5 bis 20 phr Rapsöl. Durch die Zudosierung von Rapsöl können die resultierenden Reifeneigenschaften nochmals vor allem in Hinblick auf die Wintereigenschaften und den Rollwiderstand verbessert werden. Bei Rapsöl handelt es sich zudem um einen aus ökölogischen Gründen zu bevorzugenden nachwachsenden Rohstoff.

Die erfindungsgemäße Kautschukmischung kann 5 bis 50 phr, vorzugsweise bis 20 phr, Ruß enthalten. Der Zusatz von Ruß bringt verarbeitungstechnische Vorteile. Die verwendeten Ruße sollten insbesondere folgende Charakteristika aufweisen: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg.

Die Kautschukmischung kann außerdem noch andere Füllstoffe, wie beispielsweise Aluminiumoxide, Alumosilicate, Kreide, Stärke, Magnesiumoxid, Titandioxid oder Kautschukgele, in üblichen Mengen enthalten.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Zur Vulkanisation werden der Kautschukmischung 0,5 bis 2,0 phr, vorzugsweise 0,9 bis 1,8 phr, Schwefel zugesetzt. Diese Mengen an Schwefel liegen in Bereichen, die man bei üblichen Kautschukmischungen als geringe Mengen bezeichnet. Bei weniger als 0,5 phr Schwefel erzielt man keine ausreichende Vernetzung. Bei mehr als 2 phr Schwefel in der erfindungsgemäßen Mischung verschlechtert sich das Abriebverhalten und die strukturelle Haltbarkeit wird schlechter. Der Schwefel wird der Kautschukmischung in der Regel im letzten Mischungsschritt zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. Diphenylguanidin (DPG), Thiurambeschleuniger wie z. B. Tetrabenzylthiuramdisulfid, Dithiocarbamatbeschleuniger wie z. B. Zinkdibenzyldithiocarbamar, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form eines Laufstreifenrohlings gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Nach der Vulkanisation des Fahrzeugreifens weist der Reifen einen sehr guten Nassgriff bei noch gutem Rollwiderstand auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet Von Mischung V1 ausgehend wurden zunächst Vergleichsmischungen V2 bis V6 hergestellt, bei denen jeweils nur ein Mischungsbestandteil ausgetauscht bzw. verändert wurde. Die Mischungen E1 bis E4 sind die erfindungsgemäßen Mischungen, bei denen die Kombination von speziellem S-SBR mit Kieselsäure, speziellem Weichmacher und wenig Schwefel vorliegt.

Es wurden Reifen hergestellt, deren Laufstreifen die in der Tabelle 1 genannten vulkanisierten Mischungen aufwiesen. Mit diesen Reifen wurden Reifenversuche im Hinblick auf den Nassgriff beim ABS-Bremsen, auf den Rollwiderstand, auf den Abrieb, auf die Wintereigenschaften (Bremsen auf Eis) und auf das Trockenbremsen durchgeführt. Die Ergebnisse dieser Reifenversuche sind im unteren Teil der Tabelle 1 aufgeführt, wobei die Eigenschaften des Reifens mit der Ausgangsmischung V1 gleich 100 gesetzt wurden (rating); Werte größer als 100 bedeuten dann eine Verbesserung der entsprechenden Eigenschaft, Werte kleiner als 100 bedeuten eine Verschlechterung.

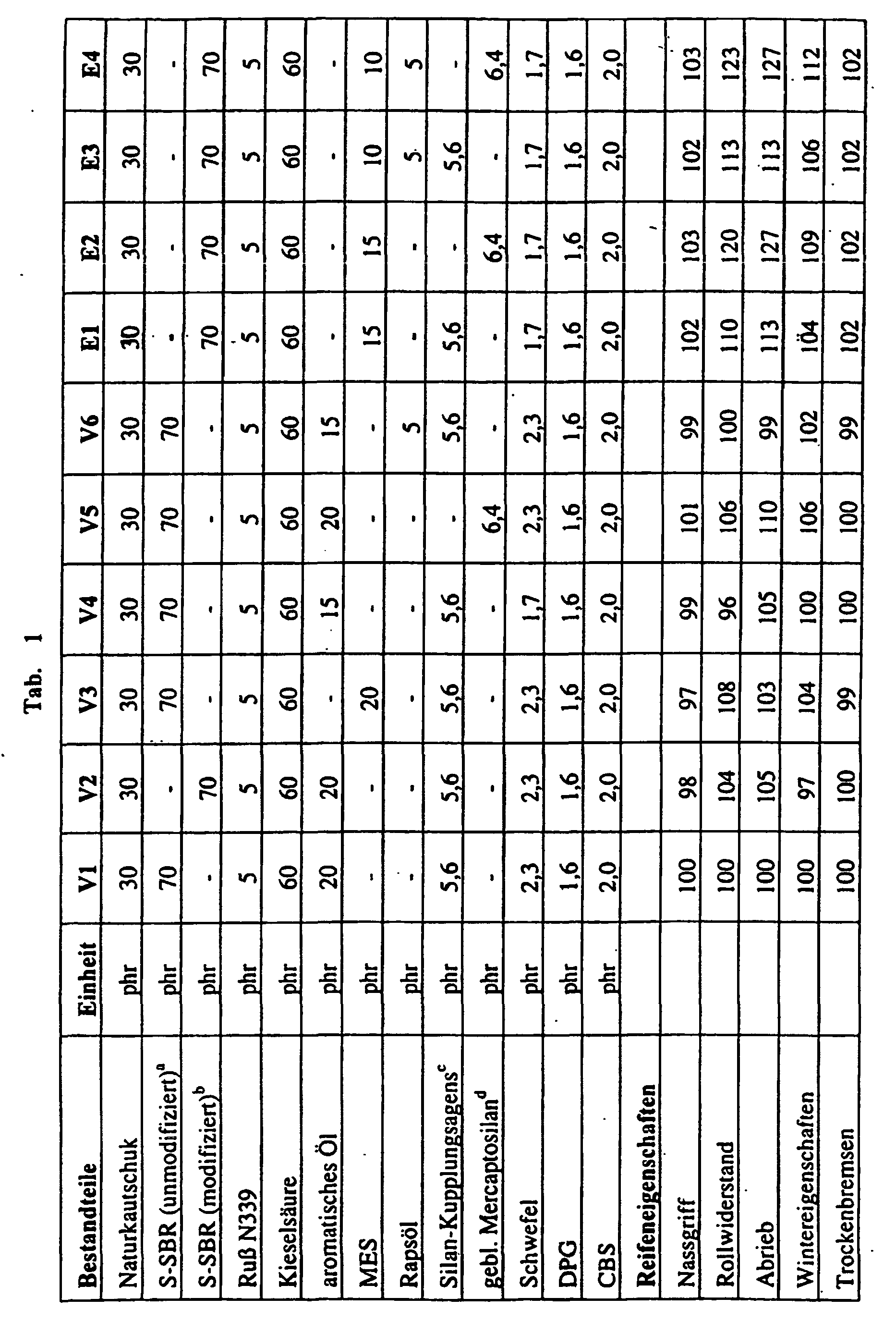

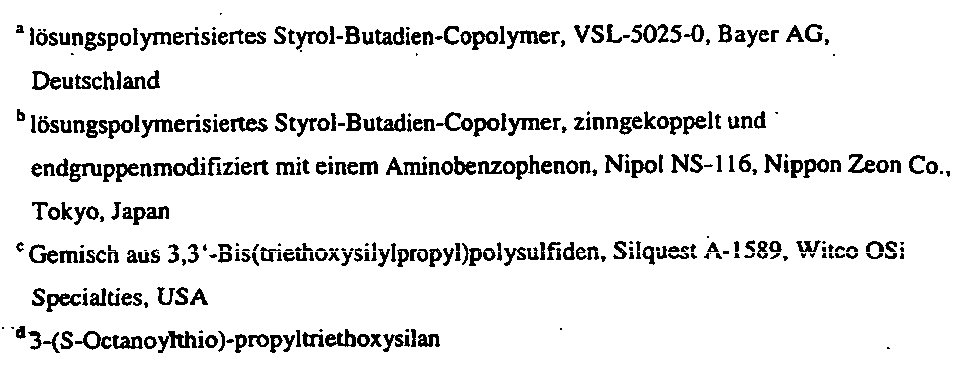

Aus der Tabelle 1 wird ersichtlich, dass die alleinige Zugabe von zinngekoppeltem und chemisch modifiziertem S-SBR (V2), MES (V3) oder wenig Schwefel (V4) zwar mit Verbesserungen in einigen Reifeneigenschaften verbunden ist, der Nassgriff beim ABS-Bremsen aber immer Einbußen erleidet. Erst der gleichzeitige Einsatz aller drei Substanzen (E1) bringt in der Mischung mit Kieselsäure und Silan-Kupplungsagens den überraschenden Effekt, dass sich gleichzeitig mit einer deutlichen und mehr als additiven Verbesserung der Eigenschaften Rollwiderstand, Eisbremsen, Abrieb und Trockenbremsen auch der Nassgriff beim ABS-Bremsen verbessert.
Durch die Zugabe eines geblockten Mercaptosilans (E2, E4) kann man zusätzlich deutlich positive Effekte beim Rollwiderstand, beim Abrieb und bei den Wintereigenschaften erzielen. Die Zugabe von Rapsöl (E3, E4) verbessert außerdem die Wintereigenschaften und den Rollwiderstand.

## Patentansprüche

1. Kautschukmischung ohne aromatische Prozessöle, die gemäß ASTM D 2140 über 25 %, vorzugsweise über 33 %, aromatische Bestandteile (C_{A}), weniger als 45 % naphthenische (C_{N}) und weniger als 45 % paraffinische (C_{P}) Bestandteile aufweisen, enthaltend
- 30 bis 90 phr (Gewichtsteile, bezogen auf 100 Gewichtsteile der gesamten Kautschuke in der Mischung) zumindest eines lösungspolymerisierten Styrol-Butadien-Copolymers A (S-SBR), das einen Styrolgehalt von 5 bis 35 Gew.-% und einem Vinylanteil von 10 bis 85 Gew.-% aufweist, das gekoppelt ist und dessen Endgruppen mit zumindest einer Substanz ausgewählt aus der Gruppe, bestehend aus Aminoaldehyden, Aminoketonen, Aminothioaldehyden, Aminothioketonen und organischen Substanzen, die in ihrem Molekül einen Strukturbaustein 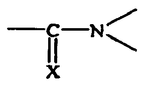 mit X = O oder S aufweisen, chemisch modifiziert sind,
- 10 bis 70 phr zumindest eines weiteren Kautschukes aus der Gruppe der Dienkautschuke,
- 20 bis 100 phr Kieselsäure,
- 1 bis 15 phr eines Silan-Kupplungsagens,
- 5 bis 60 phr zumindest eines Weichmachers, ausgewählt aus naphthenischen Mineralölweichmachern, die gemäß ASTM D 2140 zwischen 25 und 45 % naphthenische Bestandteile (C_{N}), weniger als 30 % aromatische Bestandteile (C_{A}) und zwischen 35 und 65 % paraffinische (C_{P}) Bestandteile aufweisen, MES (mild extraction solvate) und TDAE (treated distillate aromatic extract),
die nach Vulkanisation mit 0,5 bis 2,0 phr Schwefel ein für Laufstreifen von Reifen geeignetes Vulkanisat ergibt.

2. Kautschukmischung nach Anspruch 1, **dadurch gekennzeichnet, dass** das lösungspolymerisierte Styrol-Butadien-Copolymer A mit Zinn gekoppelt ist.

3. Kautschukmischung nach Anspruch 1 oder 2, **dadurch gekennzeichnet, dass** sie 40 bis 70 phr des gekoppelten und modifizierten lösungspolymerisierten Styrol-Butadien-Copolymers A enthält.

4. Kautschukmischung nach zumindest einem der Ansprüche 1 bis 3, **dadurch gekennzeichnet, dass** die Endgruppen des lösungspolymerisierten Styrol-Butadien-Copolymers A mit einem Aminobenzophenon modifiziert sind.

5. Kautschukmischung nach zumindest einem der Ansprüche 1 bis 4, **dadurch gekennzeichnet, dass** sie als weiteren Kautschuk 30 bis 60 phr zumindest eines Kautschukes, ausgewählt aus der Gruppe, bestehend aus Naturkautschuk, synthetischem Polyisopren, Polybutadien und Styrol-Butadien-Copolymer, enthält.

6. Kautschukmischung nach zumindest einem der Ansprüche 1 bis 5, **dadurch gekennzeichnet, dass** sie als Silan-Kupplungsagens ein geblocktes Mercaptosilan enthält.

7. Kautschukmischung nach Anspruch 6 **dadurch gekennzeichnet, dass** das geblockte Mercaptosilan 3-(S-Octanoylthio)-propyltriethoxysilan ist.

8. Kautschukmischung nach zumindest einem der Ansprüche 1 bis 7, **dadurch gekennzeichnet, dass** sie 5 bis 20 phr Rapsöl enthält.

9. Kautschukmischung nach zumindest einem der Ansprüche 1 bis 8, **dadurch gekennzeichnet, dass** sie 5 bis 50 phr Ruß enthält.

10. Reifen, dessen Laufstreifen zumindest zum Teil aus einer mit Schwefel vulkanisierten Kautschukmischung nach zumindest einem der Ansprüche 1 bis 9 besteht.

## Claims

1. Rubber blend without aromatic process oils which, according to ASTM D 2140, have more than 25%, preferably more than 35%, of aromatic components (C_{A}), less than 45% of naphthenic (C_{N}) and less than 45% of paraffinic (C_{P}) components, containing
- 30 to 90 phr (parts by weight, based on 100 parts by weight of all the rubbers in the blend) of at least one styrene/butadiene copolymer A (S-SBR) which is prepared by solution polymerization, has a styrene content of 5 to 35% by weight and a vinyl content of 10 to 85% by weight and is coupled, and the terminal groups of which are chemically bonded with at least one substance selected from the group consisting of aminoaldehydes, aminoketones, aminothioaldehydes, aminothioketones and organic substances which have a structural building block 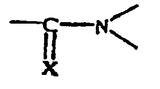 with X = O or S in their molecule,
- 10 to 70 phr of at least one further rubber from the group consisting of the diene rubbers,
- 20 to 100 phr of silica,
- 1 to 15 phr of a silane coupling agent,
- 5 to 60 phr of at least one plasticizer selected from naphthenic mineral oil plasticizers which, according to ASTM D 2140, have between 25 and 45% of naphthenic components (C_{N}), less than 30% of aromatic components (C_{A}) and between 35 and 65% of paraffinic (C_{P}) components, MES (mild extraction solvate) and TDAE (treated distillate aromatic extract),
which, after vulcanization with 0.5 to 2.0 phr of sulphur, gives a vulcanized product suitable for treads of tyres.

2. Rubber blend according to Claim 1, **characterized in that** the styrene/butadiene copolymer A prepared by solution polymerization is coupled with tin.

3. Rubber blend according to Claim 1 or 2, **characterized in that** it contains 40 to 70 phr of the coupled and modified styrene/butadiene copolymer A prepared by solution polymerization.

4. Rubber blend according to at least one of Claims 1 to 3, **characterized in that** the terminal groups of the styrene/butadiene copolymer A prepared by solution polymerization are modified with an aminobenzophenone.

5. Rubber blend according to at least one of Claims 1 to 4, **characterized in that** it contains, as further rubber, 30 to 60 phr of at least one rubber selected from the group consisting of natural rubber, synthetic polyisoprene, polybutadiene and styrene/butadiene copolymer.

6. Rubber blend according to at least one of Claims 1 to 5, **characterized in that** it contains a blocked mercaptosilane as the silane coupling agent.

7. Rubber blend according to Claim 6, **characterized in that** the blocked mercaptosilane is 3-(S-octanoylthio)propyltriethoxysilane.

8. Rubber blend according to at least one of Claims 1 to 7, **characterized in that** it contains 5 to 20 phr of rapeseed oil.

9. Rubber blend according to at least one of Claims 1 to 8, **characterized in that** it contains 5 to 50 phr of carbon black.

10. Tyre, the tread of which at least partly comprises a rubber blend vulcanized with sulphur according to at least one of Claims 1 to 9.

## Revendications

1. Mélange de caoutchoucs sans huiles aromatiques de processus qui, selon ASTM D 2140, présente plus de 25 % et de préférence plus de 35 % de composants aromatiques (C_{A}), moins de 45 % de composants naphténiques (C_{N}) et moins de 45 % de composants paraffiniques (Cp), qui contient
- entre 30 et 90 phr (parties en poids par rapport à 100 parties en poids de tous les caoutchoucs du mélange) d'au moins un copolymère A (S-SBR) de styrène et de butadiène polymérisé en solution, dont la teneur en styrène est comprise entre 5 et 35 % en poids et la teneur en vinyle est comprise entre 10 et 85 % en poids, qui est couplé et dont les groupes terminaux qui présentent au moins une substance sélectionnée dans le groupe composé des aminoaldéhydes, des aminocétones, des aminothioaldéhydes, des aminothiocétones et des substances organiques dont la molécule présente le motif structurel 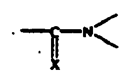
où X = O ou S sont chimiquement modifiés,
- de 10 à 70 phr d'au moins un autre caoutchouc du groupe des caoutchoucs diéniques,
- de 20 à 100 phr d'acide silique,
- de 1 à 15 phr d'un agent de couplage à base de silane,
- de 5 à 60 phr d'au moins un plastifiant sélectionné parmi les plastifiants naphténiques à huile minérale, qui, selon ASTM D 2140, contient entre 25 et 45 % de composants naphténiques (C_{N}), moins de 30 % de composants aromatiques (C_{A}) et entre 35 et 65 % de composants paraffiniques (C_{P}), du MES ("**m**ild **e**xtraction **s**olvate" - solvat d'extraction modérée) et du TDAE ("**t**reated **d**istillate **a**romatic extract" - extrait aromatique de distillat traité), qui, après vulcanisation avec de 0,5 à 2,0 phr de soufre, donne un résultat de vulcanisation qui convient à la bande de roulement du bandage.

2. Mélange de caoutchoucs selon la revendication 1, **caractérisé en ce que** le copolymère A de styrène et de butadiène polymérisé en solution est couplé à de l'étain.

3. Mélange de caoutchoucs selon les revendications 1 ou 2, **caractérisé en ce qu'**il contient de 40 à 70 phr du copolymère A de styrène et de butadiène polymérisé en solution, modifié et couplé.

4. Mélange de caoutchoucs selon au moins l'une des revendications 1 à 3, **caractérisé en ce que** les groupes terminaux du copolymère A de styrène et de butadiène polymérisé en solution sont modifiés au moyen d'une aminobenzophénone.

5. Mélange de caoutchoucs selon au moins l'une des revendications 1 à 4, **caractérisé en ce que** comme autre caoutchouc, il contient entre 30 et 60 phr d'au moins un caoutchouc sélectionné dans l'ensemble constitué du caoutchouc naturel, des polyisoprènes synthétiques, du polybutadiène et des copolymères de styrène et de butadiène.

6. Mélange de caoutchoucs selon au moins l'une des revendications 1 à 5, **caractérisé en ce que**, comme agent de couplage à base de silane, il contient un mercaptosilane bloqué.

7. Mélange de caoutchoucs selon la revendication 6, **caractérisé en ce que** le mercaptosilane bloqué est le 3-(S-octanoylthio)-propyltriéthoxysilane.

8. Mélange de caoutchoucs selon au moins l'une des revendications 1 à 7, **caractérisé en ce qu'**il contient de 5 à 20 phr d'huile de colza.

9. Mélange de caoutchoucs selon au moins l'une des revendications 1 à 8, **caractérisé en ce qu'**il contient entre 5 et 50 phr de suie.

10. Bande pneumatique dont la bande de roulement est constituée au moins en partie d'un mélange de caoutchoucs selon au moins l'une des revendications 1 à 9, vulcanisé au soufre.
